# EUROPÄISCHE PATENTSCHRIFT

(11) **EP 3 721 175 B1**
(45) Veröffentlichungstag und Bekanntmachung des Hinweises auf die Patenterteilung: **09.03.2022**
(21) Anmeldenummer: 18789106.4
(22) Anmeldetag: 16.10.2018
(51) Int. Cl.: G01D 5/245, G01P 3/00, G01P 3/44

(54) **SENSORSYSTEM ZUR BESTIMMUNG MINDESTENS EINER ROTATIONSEIGENSCHAFT EINES UM MINDESTENS EINE ROTATIONSACHSE ROTIERENDEN ELEMENTS**
SENSOR SYSTEM FOR DETERMINING AT LEAST ONE ROTATIONAL PROPERTY OF AN ELEMENT ROTATING AROUND AT LEAST ONE ROTATION AXIS
SYSTEME DE CAPTEUR PERMETTANT DE DETERMINER AU MOINS UNE PROPRIETE DE ROTATION D'UN ELEMENT TOURNANT AUTOUR D'AU MOINS UN AXE DE ROTATION

(30) Priorität: 04.12.2017 DE 102017221763
(43) Veröffentlichungstag der Anmeldung: 14.10.2020
(73) Patentinhaber: Robert Bosch GmbH, 70442 Stuttgart (DE)
(72) Erfinder: OPITZ, Bernhard, 72770 Reutlingen-Betzingen (DE); YASHAN, Andre, 70191Stuttgart (DE); UTERMOEHLEN, Fabian, 59557 Lippstadt (DE); ROLEW, Eduard, 71229 Leonberg (DE)
(86) Internationale Anmeldenummer: PCT/EP2018/078258
(87) Internationale Veröffentlichungsnummer: WO 2019/110178

(56) Entgegenhaltungen:
- DE-A1-102004 045 849
- DE-A1-102012 012 870
- DE-A1-102016 206 714

## Beschreibung

### Stand der Technik

Aus dem Stand der Technik sind zahlreiche Sensoren bekannt, welche mindestens eine Rotationseigenschaft rotierender Elemente erfassen. Unter einer Rotationseigenschaft ist dabei allgemein eine Eigenschaft zu verstehen, welche die Rotation des rotierenden Elements zumindest teilweise beschreibt. Hierbei kann es sich beispielsweise um eine Winkelgeschwindigkeit, eine Drehzahl, eine Winkelbeschleunigung, einen Drehwinkel oder eine andere Eigenschaft handeln, welche eine kontinuierliche oder diskontinuierliche, gleichförmige oder ungleichförmige Rotation oder Drehung des rotierenden Elements charakterisieren kann. Beispiele derartiger Sensoren sind in Konrad Reif (Hrsg.): Sensoren im Kraftfahrzeug, 2. Auflage, 2012, Seiten 63-74 und 120-129 beschrieben.

Beispielsweise kann eine Drehzahl eines Rotors oder eine Winkelposition eines Rotors einer elektrischen Maschine, insbesondere einer elektrischen Maschine eines Elektrofahrzeugs bestimmt werden. Weiterhin kann auch eine Lage einer Nockenwelle einer Brennkraftmaschine relativ zu einer Kurbelwelle mit einem so genannten Phasengeber mittels eines Hall-Sensors bestimmt werden. Typischerweise wird auf der sich drehenden Achse ein Geberrad angebracht. Auf dem Geberrad können sich Zähne befinden, die durch den Hall-Sensor abgetastet werden, wenn sich die Nockenwelle dreht.

So wird in der DE 40 11 503 A1 eine Vorrichtung zur Erfassung eines rotierenden Teils einer Brennkraftmaschine beschrieben, bei der das rotierende Teil eine Geberradscheibe mit einer Vielzahl von regelmäßigen Zähnen versehen ist. Weiterhin ist in der DE 10 2014 220 458 A1 eine Sensoranordnung zur berührungslosen Erfassung von Drehwinkeln an einem rotierenden Bauteil beschrieben, wobei das rotierende Bauteil mit einem scheibenförmigen Target gekoppelt ist. Ferner ist in der DE10 2013 203 937 A1 eine elektrische Maschine mit einem Rotor, welcher in einem Stator um eine Rotationsachse drehbar gelagert ist beschrieben, wobei zumindest ein optischer Sensor bereitgestellt ist, welcher bezüglich des Stators ortsfest gelagert ist und welcher einen optischen Erfassungsbereich aufweist. Der Rotor weist hier eine Markierungseinrichtung mit zumindest einer optischen Markierung auf.

Trotz der durch derartige Sensorvorrichtungen bewirkten Verbesserungen besteht nach wie vor Verbesserungspotenzial. So benötigen Sensorvorrichtungen der beschriebenen Art häufig viel Bauraum. Im Falle eines Defekts ist der Austausch in der Regel nur mit erheblichem Aufwand möglich. Weiterhin besteht häufig ein hoher Schaltungsaufwand. Weiterhin spielt in der Regel insbesondere bei hohen Drehzahlen ein Schleppfehler und häufig damit verbunden eine mangelnde Genauigkeit, beispielsweise in der Messung des Drehwinkels, eine große Rolle.

Aus der DE 10 2016 206714 A1 ist ein Verfahren zum Ermitteln einer absoluten Winkellage einer rotierenden Welle bekannt, bei dem ein digitales Absolutwinkelsignal und ein Inkrementalgebersignal erfasst werden, und das Inkrementalgebersignal nach einem Abgleich des Inkrementalgebersignals mit dem digitalen Signal zur Ermittlung der absoluten Winkellage verwendet wird.

Aus der DE 10 2012 012870 A1 ist ein Verfahren zum Betrieb eines mehrkanaligen Drehwinkelgebers mit mindestens einer Leiterplatte bekannt, bei dem mindesten ein Positionswandler absolute und inkrementale Messwerte erzeugt, die jeweils über mindestens einen Kanal einer Kontrolleinheit zugeführt werden, welche als Regelungs- und Sicherheitsüberwachung ausgebildet ist.

Aus der DE 10 2004 045849 A1 ist eine Messgeber-Vorrichtung zur Ermittlung absoluter Winkel- oder Wegstrecken bekannt, bei der der Abstand von der Ist- zur Referenzposition bei Veranlassung ermittelt und über Inkrementalsignale ausgegeben wird.

### Offenbarung der Erfindung

Im Rahmen der vorliegenden Erfindung wird daher ein Sensorsystem zur Bestimmung mindestens einer Rotationseigenschaft eines rotierenden Elements vorgeschlagen, wobei das Sensorsystem mindestens ein mit dem rotierenden Element verbindbares Geberrad aufweist, wobei das Geberrad ein Geberradprofil aufweist, wobei das Sensorsystem mindestens einen Positionssensor und mindestens einen Phasengeber umfasst, wobei das Sensorsystem mindestens eine digitale Schnittstelle und mindestens eine inkrementelle Schnittstelle aufweist, wobei das Sensorsystem eingerichtet ist, um über die digitale Schnittstelle mindestens ein mittels des Positionssensors erzeugtes absolutes Positionssignal auszugeben und über die inkrementelle Schnittstelle mindestens ein mittels des Phasengebers erzeugtes Inkrementalsignal auszugeben, und wobei das Sensorsystem weiterhin mindestens eine Steuereinheit umfasst, wobei die Steuereinheit eingerichtet ist, um das Positionssignal und das Inkrementalsignal über die Schnittstellen zu erfassen und wobei die Steuereinheit weiterhin eingerichtet ist, mithilfe des absoluten Positionssignals und des Inkrementalsignals mindestens ein zweites Positionssignal zu bestimmen. Erfindungsgemäß ist die Steuereinheit eingerichtet ist, eine Differenz D zwischen dem absoluten Positionssignal und dem zweiten Positionssignal zu bilden, wobei die Steuereinheit eingerichtet ist, die Rotationseigenschaft aus dem absoluten Positionssignals zu bestimmen, wenn die Differenz D kleiner als ein Schwellwert Ds ist, wobei die Steuereinheit eingerichtet ist, die Rotationseigenschaft aus dem zweiten Positionssignals zu bestimmen, wenn die Differenz D größer als der Schwellwert Ds ist.

Unter einem "Sensorsystem zur Bestimmung mindestens einer Rotationseigenschaft eines rotierenden Elements" kann im Rahmen der vorliegenden Erfindung grundsätzliche eine beliebige Vorrichtung verstanden werden, welche geeignet ist, die mindestens eine Rotationseigenschaft zu erfassen und welche beispielsweise mindestens ein elektrisches Messsignal entsprechend der erfassten Eigenschaft erzeugen kann, wie beispielsweise eine Spannung oder einen Strom. Auch Kombinationen von Eigenschaften können erfassbar sein. Unter einer "Rotationseigenschaft" kann im Rahmen der vorliegenden Erfindung grundsätzlich eine Eigenschaft verstanden werden, welche die Rotation des rotierenden Elements zumindest teilweise beschreibt. Hierbei kann es sich beispielsweise um eine Winkelgeschwindigkeit, eine Drehzahl, eine Winkelbeschleunigung, eine Winkelposition oder eine andere Eigenschaften handeln, welche eine kontinuierliche oder diskontinuierliche, gleichförmige oder ungleichförmige Rotation oder Drehung des rotierenden Elements zumindest teilweise charakterisieren kann. Beispielsweise kann es sich bei der Rotationseigenschaft um eine Position, insbesondere eine Winkelposition, oder um eine Drehzahl oder um eine Kombination beider Größen handeln. Auch andere Eigenschaften und/oder andere Kombinationen von Eigenschaften können erfassbar sein. Unter einer "Winkelposition" kann im Rahmen der vorliegenden Erfindung grundsätzlich ein Drehwinkel einer rotationsfähigen Vorrichtung, beispielsweise des rotierenden Elements oder des Geberrads, bezüglich einer senkrecht auf der Rotationsachse stehenden Achse verstanden werden.

Das Sensorsystem kann insbesondere zum Einsatz in einem Kraftfahrzeug, insbesondere in einer Brennkraftmaschine oder einem Elektromotor, eingerichtet sein. Unter einem "rotierenden Element" kann im Rahmen der vorliegenden Erfindung grundsätzlich ein beliebiges Element verstanden werden, welches eine Rotationsachse aufweist und um diese rotiert. Beispielsweise kann das rotierende Element eine Welle in einer Antriebsmaschine sein, beispielsweise eine Nockenwelle. Beispielsweise kann eine Winkelposition einer Nockenwelle oder eine Drehzahl einer Nockenwelle oder eine Kombination beider Größen bestimmt werden. Ferner kann es sich bei dem rotierenden Element auch um ein rotierendes Element eines Elektromotors handeln, beispielsweise um einen Rotor.

Das Sensorsystem zur Bestimmung mindestens einer Rotationseigenschaft eines um mindestens eine Rotationsachse rotierenden Elements weist ein mit dem rotierenden Element verbindbares Geberrad auf. Das Geberrad weist ein Geberradprofil auf. Das Sensorsystem umfasst mindestens einen Positionssensor und mindestens einen Phasengeber. Weiterhin weist das Sensorsystem mindestens eine digitale Schnittstelle und mindestens eine inkrementelle Schnittstelle auf, wobei das Sensorsystem eingerichtet ist, um über die digitale Schnittstelle mindestens ein mittels des Positionssensors erzeugtes absolutes Positionssignal auszugeben und über die inkrementelle Schnittstelle mindestens ein mittels des Phasengebers erzeugtes Inkrementalsignal auszugeben.

Unter einem "Geberrad" kann im Rahmen der vorliegenden Erfindung grundsätzlich ein beliebiges mit dem rotierenden Element verbindbares Bauelement verstanden werden, das eingerichtet ist, bei Verbindung mit dem rotierenden Element pro Umdrehung des rotierenden Elements mindestens ein messbares Signal, insbesondere eine Magnetfeldänderung, zu bewirken. Unter einem "Geberradprofil" kann im Rahmen der vorliegenden Erfindung grundsätzlich die Gesamtheit von Profilelementen und von zwischen den Profilelementen angeordneten Zwischenräumen des Geberrads verstanden. Weiterhin kann unter dem Geberradprofil auch die Anordnung, beispielsweise die Reihenfolge, der Profilelemente verstanden werden. Unter einem "Profilelement" des Geberrads kann im Rahmen der vorliegenden Erfindung grundsätzlich ein beliebiges Element verstanden werden, welches als Bestandteil des Geberrads dazu beiträgt, bei Verbindung des Geberrads mit dem rotierenden Element pro Umdrehung des rotierenden Elements das mindestens eine messbare Signal zu bewirken. Insbesondere kann es sich bei dem Profilelement um eine beliebige Ausformung der Kontur des Geberrads handeln, insbesondere eine Ausbuchtung, beispielsweise eine stiftörmige, eine zahnförmige oder eine zackenförmige Ausbuchtung, oder eine Einkerbung oder eine Aussparung, beispielsweise ein Loch. Das Profilelement kann jedoch eine beispielsweise kreisförmige Kontur des Geberrads auch unverändert lassen. Insbesondere kann das Profilelement durch elektrische, magnetische oder optische Eigenschaften zu der Entstehung des messbaren Signals beitragen. Beispielsweise kann ein Geberrad, insbesondere ein Geberrad mit kreisförmiger Kontur, eine Mehrzahl von Profilelementen aufweisen, welche derart angeordnet sein können, dass mindestens ein elektrisch leitfähiges Profilelement von mindestens einem elektrisch nicht leitfähigen Profilelement gefolgt wird. Insbesondere kann das mindestens eine Profilelement mindestens ein Material aufweisen ausgewählt aus der Gruppe bestehend aus: einem elektrisch leitfähigem Material; einem ferromagnetischen Material; einem Metall. Weiterhin kann das Geberrad ein Material aufweisen ausgewählt aus der Gruppe bestehend aus: einem elektrisch leitfähigem Material; einem ferromagnetischen Material; einem Metall. Ferner kann das Sensorsystem mindestens zwei Geberräder aufweisen, insbesondere zwei Geberräder mit unterschiedlichen Geberradprofilen.

Unter einem "Positionssensor" kann im Rahmen der vorliegenden Erfindung grundsätzlich ein beliebiger Sensor verstanden werden, der mindestens eine Rotationseigenschaft umfassend eine Winkelposition erfassen kann und der beispielsweise mindestens ein elektrisches Messsignal entsprechend der Winkelposition erzeugen kann, wie beispielsweise eine Spannung oder einen Strom. Bei dem Positionssensor kann es sich beispielsweise um einen induktiven Positionssensor handeln, wobei eine Erzeugung des Messsignals durch den induktiven Positionssensor auf einer Änderung eines magnetischen Flusses beruht. So kann der Positionssensor, insbesondere der induktive Positionssensor, mindestens eine Spule, insbesondere eine Mehrzahl von mindestens 2 Spulen, aufweisen, beispielsweise mindestens eine Erregerspule und mindestens eine Empfängerspule, insbesondere mindestens 2 Empfängerspulen, bevorzugt 3 Empfängerspulen. Insbesondere können die Empfängerspulen aus jeweils mindestens zwei Teilwindungen bestehen, wobei die unmittelbar aufeinanderfolgenden Teilwindungen gegenläufig orientiert sein können. Insbesondere können die Empfängerspulen zueinander eine elektrische Phasenverschiebung aufweisen. Insbesondere kann der Positionssensor bevorzugt 3 Empfängerspulen aufweisen und die 3 Empfängerspulen können zueinander eine elektrische Phasenverschiebung von 120° aufweisen. Weiterhin können die Teilwindungen der verschiedenen Empfängerspulen gemäß der elektrischen Phasenverschiebung der verschiedenen Empfängerspulen gegeneinander versetzt angeordnet sein. Unter einer "Erregerspule" kann im Rahmen der vorliegenden Erfindung grundsätzlich eine Spule verstanden werden, welche bei Anlegen einer elektrischen Spannung und/oder eines elektrischen Stroms einen magnetischen Fluss erzeugt. Insbesondere kann die Erregerspule mit einer Wechselspannung von 2 MHz bis 10 MHz, bevorzugt von 4 MHz bis 6 MHz, besonders bevorzugt von 5 MHz beaufschlagt sein. Unter einer "Empfängerspule" kann im Rahmen der vorliegenden Erfindung grundsätzlich eine Spule verstanden werden, welche eingerichtet ist, aufgrund einer induktiven Kopplung zwischen Erregerspule und Empfängerspule ein Signal zu erzeugen, welches abhängig ist von der induktiven Kopplung. Auch Positionssensoren, die auf anderen Messprinzipien oder anderen Prinzipien der Messsignalerzeugung beruhen, sind jedoch denkbar.

Das Sensorsystem umfasst weiterhin einen Phasengeber. Unter einem "Phasengeber" kann im Rahmen der vorliegenden Erfindung grundsätzlich ein beliebiger Sensor verstanden werden, der geeignet ist, mindestens einmal pro Umdrehung mindestens ein elektrisches Messsignal, insbesondere eine Spannung oder einen Strom, entsprechend einer Eigenschaft eines mindestens einen Signalgeber aufweisenden rotierenden Elements zu erzeugen, welche die Rotation des rotierenden Elements zumindest teilweise beschreibt. Bei der Eigenschaft kann es sich beispielsweise um eine Drehzahl, eine Winkelgeschwindigkeit, eine Winkelbeschleunigung oder eine Winkelposition handeln. Auch andere Eigenschaften oder Kombinationen von Eigenschaften können erfassbar sein. Unter einem "Signalgeber" kann im Rahmen der vorliegenden Erfindung grundsätzlich eine beliebige, sich auf dem rotierenden Element befindende oder mit dem rotierenden Element verbundene oder verbindbare Vorrichtung verstanden werden, die geeignet ist, pro Umdrehung des rotierenden Elements mindestens ein messbares Signal zu bewirken, beispielsweise eine Magnetfeldänderung. Beispielsweise kann das oben bereits beschriebene und weiter unten noch näher ausgeführte Geberrad, insbesondere das mindestens eine Profilement des Geberrads, als Signalgeber fungieren. Der Phasengeber kann mindestens einen Magnetfelderzeuger aufweisen, insbesondere mindestens einen Dauermagneten und/oder mindestens einen Elektromagneten. Weiterhin kann der Phasengeber mindestens ein Magnetsensorelement aufweisen, insbesondere ein Magnetsensorelement ausgewählt aus der Gruppe bestehend aus: einem Hall-Element; einem magnetoresistiven Element. Ferner kann der Phasengeber mindestens eine Spule aufweisen.

Das Sensorsystem umfasst mindestens eine digitale Schnittstelle. Unter einer "digitalen Schnittstelle" kann im Rahmen der vorliegenden Erfindung grundsätzlich eine beliebige Schnittstelle verstanden werden, welche mindestens ein eingehendes Signal in mindestens ein ausgehendes Signal umsetzen kann, wobei das ausgehende Signal mindestens ein digitales Signal umfasst. Insbesondere kann es sich bei dem eingehenden Signal um mindestens ein analoges Signal handeln. Beispielsweise kann das von der digitalen Schnittstelle umgesetzte Signal für eine Übertragung an eine Steuereinheit vorgesehen sein. Das Sensorsystem umfasst weiterhin mindestens eine inkrementelle Schnittstelle. Unter einer "inkrementellen Schnittstelle" kann im Rahmen der vorliegenden Erfindung grundsätzlich eine beliebige Schnittstelle verstanden werden, welche eingerichtet ist, mindestens ein eingehendes Signal eines Phasengebers in mindestens ein ausgehendes Signal umzusetzen. Die inkrementelle Schnittstelle kann insbesondere ganz oder teilweise digital und/oder analog ausgebildet sein. Bei dem eingehenden Signal des Phasengebers kann es sich insbesondere um mindestens ein analoges Signal handeln. Bei dem ausgehenden Signal kann es sich insbesondere um mindestens ein digitales Signal handeln. Beispielsweise kann das von der inkrementellen Schnittstelle umgesetzte Signal für eine Übertragung an eine Steuereinheit vorgesehen sein. Insbesondere kann die inkrementelle Schnittstelle getrennt von der digitalen Schnittstelle ausgebildet sein.

Unter einem "absoluten Positionssignal" kann im Rahmen der vorliegenden Erfindung grundsätzlich ein von dem Positionssensor erzeugtes, elektrisches Messsignal verstanden werden. Dabei kann es sich bei dem absoluten Positionssignal um das gemäß der mindestens einen erfassten, eine Winkelposition umfassenden Rotationseigenschaft erzeugte elektrische Messsignal handeln. Insbesondere kann das absolute Positionssignal mindestens ein analoges Signal umfassen. Unter einem "Inkrementalsignal" kann im Rahmen der vorliegenden Erfindung grundsätzlich ein von dem Phasengeber erzeugtes elektrisches Messsignal verstanden werden. Dabei kann es sich bei dem Inkrementalsignal um das entsprechend einer Eigenschaft des rotierenden Elements erzeugte, elektrische Messsignal handeln. Insbesondere kann das Inkrementalsignal mindestens ein periodisches Signal umfassen. Insbesondere kann das Inkrementalsignal pro Umdrehung des rotierenden Elements mindestens einmal auftreten. Weiterhin kann das Inkrementalsignal mindestens ein analoges Signal umfassen.

Das Sensorsystem umfasst eine Steuereinheit, wobei die Steuereinheit eingerichtet ist, um das Positionssignal und das Inkrementalsignal über die Schnittstellen zu erfassen. Unter einer "Steuereinheit" kann im Rahmen der vorliegenden Erfindung grundsätzlich ein beliebiges elektronisches Modul verstanden werden, welches mindestens eine elektrische und/oder elektronische Schaltung umfasst, welche eingerichtet ist, um mindestens ein Sensorelement, beispielsweise einen Positionssensor und/oder einen Phasengeber, für eine Messung anzusteuern und/oder mindestens ein Messsignal des Sensorelements aufzunehmen. Die Steuereinheit kann insbesondere ein der mehrere elektronische Bauelemente umfassen, wie beispielsweise mindestens einen Verstärker, mindestens ein Speicherelement, mindestens eine Datenverarbeitungsvorrichtung oder Kombinationen der genannten und/oder anderer Elemente.

Die Steuereinheit ist eingerichtet, das absolute Positionssignal mithilfe des Inkrementalsignals zu überprüfen und zu korrigieren. Ferner kann die Steuereinheit eingerichtet sein, mindestens einen Schleppfehler des absoluten Positionssignals mithilfe des Inkrementalsignals zu ermitteln. Insbesondere kann eine Zeitdauer einer Ausgabe des absoluten Positionssignals über die digitale Schnittstelle und/oder eine Zeitdauer einer digitalen Übertragung zu dem Schleppfehler beitragen. Weiterhin kann eine Rechenzeit für eine Bestimmung der Winkelposition aus dem elektrischen Messsignal zu dem Schleppfehler beitragen. Unter einem "Schleppfehler" kann im Rahmen der vorliegenden Erfindung grundsätzlich eine Abweichung des aus einem Messsignal bestimmten Werts einer Messgröße von dem tatsächlichen Wert der Messgröße verstanden werden, wobei die Abweichung zumindest teilweise durch eine zeitliche Differenz zwischen dem Messzeitpunkt und einer Ausgabe des Messwerts beruht.

Weiterhin ist die Steuereinheit eingerichtet, mithilfe des absoluten Positionssignals und des Inkrementalsignals mindestens ein zweites Positionssignal zu bestimmen, wobei die Rotationseigenschaft aus dem zweiten Positionssignal bestimmbar ist. Die Steuereinheit ist eingerichtet, um das zweite Positionssignal zu bestimmen durch eine Korrektur des absoluten Positionsignals mithilfe des Inkrementalsignals. Unter einer "Korrektur" kann im Rahmen der vorliegenden Erfindung ein zumindest teilweises Beseitigen oder Beheben von mindestens einem Fehler verstanden werden. Beispielsweise kann der Fehler den Schleppfehler umfassen. Die Steuereinheit ist eingerichtet, das zweite Positionssignal mit dem absoluten Positionssignal zu vergleichen.

Die Steuereinheit ist erfindungsgemäß eingerichtet, eine Differenz D zwischen dem absoluten Positionssignal und dem zweiten Positionssignal zu bilden. Die Steuereinheit ist weiterhin eingerichtet, die Rotationseigenschaft aus dem absoluten Positionssignals zu bestimmen, wenn die Differenz D kleiner ist als ein Schwellwert D_{S}, wobei die Steuereinheit ferner eingerichtet ist, die Rotationseigenschaft aus dem zweiten Positionssignals zu bestimmen, wenn die Differenz D größer ist als der Schwellwert Ds. Der Schwellwert Ds kann einem der Bereiche zugeordnet werden. Der Schwellwert Ds kann insbesondere einen Wert der Differenz D zwischen dem absoluten Positionssignal und dem zweiten Positionssignal umfassen. Insbesondere kann der Schwellwert Ds den Wert der Differenz D zwischen dem absoluten Positionssignal und dem zweiten Positionssignal umfassen und der Wert der Differenz kann einen Wert von 0,1° bis 1° aufweisen, insbesondere elektrische oder zwischen elektrischen Positionssignalen. Weiterhin kann der Schwellwert Ds eine Frequenz des Inkrementalsignals umfassen.

Das Sensorsystem umfasst mindestens eine digitale Schnittstelle und mindestens eine inkrementelle Schnittstelle. Die digitale Schnittstelle kann mindestens eines der folgenden Elemente umfassen: eine SENT-Schnittstelle; eine PSI5-Schnittstelle. Hierbei steht die Abkürzung SENT für "Single Edge Nibble Transmission". Ferner steht die Abkürzung PSI5 für "Peripheral Sensor Interface 5" oder periphere Sensorschnittstelle 5. Die inkrementelle Schnittstelle kann mindestens eines der folgenden Elemente umfassen: eine Komparatorschaltung; einen Schmitt-Trigger. Insbesondere kann die inkrementelle Schnittstelle eingerichtet sein, um das Inkrementalsignal des Phasengebers mittels der Komparatorschaltung und/oder mittels des Schmitt-Triggers in ein digitales Signal umzusetzen. Weiterhin kann das Sensorsystem eingerichtet sein, um über die digitale Schnittstelle mindestens eine Sensorstatusinformation auszugeben. Insbesondere kann das über die digitale Schnittstelle ausgegebene absolute Positionssignal die Sensorstatusinformation umfassen. Unter einer "Sensorstatusinformation" kann im Rahmen der vorliegenden Erfindung grundsätzlich mindestens ein Inhalt, insbesondere mindestens eine Information, betreffend mindestens ein Sensorsystem oder mindestens ein Sensorelement verstanden werden. Insbesondere kann es sich bei dem Sensorelement um den Positionssensor und/oder um den Phasengeber handeln. Insbesondere kann die Sensorstatusinformation mindestens einen Inhalt, insbesondere mindestens eine Information, bezüglich eines Sensortyps, einer Herstellerkennung und/oder eines Defekts des Sensorsystems oder des Sensorelements umfassen.

Das Sensorsystem kann ferner mindestens eine Auswerteeinheit umfassen, wobei die Auswerteeinheit mindestens eine erste Auswerteschaltung aufweisen kann, wobei die erste Auswerteschaltung eingerichtet ist, das absolute Positionssignal aufzubereiten. Weiterhin kann die erste Auswerteschaltung eingerichtet sein, um das absolute Positionssignal über die mindestens eine digitale Schnittstelle an die Steuereinheit weiterzuleiten. Insbesondere kann die erste Auswerteschaltung die digitale Schnittstelle umfassen. Weiterhin kann die Auswerteeinheit weiterhin mindestens eine zweite Auswerteschaltung aufweisen, wobei die zweite Auswerteschaltung eingerichtet ist, das Inkrementalsignal aufzubereiten. Weiterhin kann die zweite Auswerteschaltung eingerichtet sein, um das Inkrementalsignal über die mindestens eine inkrementelle Schnittstelle an die Steuereinheit weiterzuleiten. Insbesondere kann die zweite Auswerteschaltung die inkrementelle Schnittstelle umfassen. Die erste und zweite Auswerteschaltung können ganz oder teilweise getrennt ausgebildet sein. Sie können jedoch auch ganz oder teilweise gemeinsam ausgebildet sein, beispielsweise auf einem gemeinsamen Schaltungsträger.

In einem weiteren Aspekt der vorliegenden Erfindung wird ein Verfahren zur Bestimmung mindestens einer Rotationseigenschaft eines um mindestens eine Rotationsachse rotierenden Elements vorgeschlagen. Das Verfahren umfasst die Verwendung mindestens eines mit dem rotierenden Element verbindbaren Geberrads, wobei das Geberrad ein Geberradprofil aufweist. Das Verfahren umfasst die folgenden Schritte, bevorzugt in der angegebenen Reihenfolge. Auch eine andere Reihenfolge ist grundsätzlich möglich. Weiterhin können einer oder mehrere oder alle Verfahrensschritte auch wiederholt durchgeführt werden. Weiterhin können zwei oder mehrere der Verfahrensschritte auch ganz oder teilweise zeitlich überlappend oder gleichzeitig durchgeführt werden. Das Verfahren kann, zusätzlich zu den genannten Verfahrensschritten auch weitere Verfahrensschritte umfassen.

Die Verfahrensschritte sind:
a) Erzeugen mindestens eines absoluten Positionssignals durch mindestens einen Positionssensor;
b) Erzeugen mindestens eines Inkrementalsignals durch mindestens einen Phasengeber;
c) Ausgeben des absoluten Positionssignals an mindestens eine Steuereinheit über mindestens eine digitale Schnittstelle;
d) Ausgeben des Inkrementalsignals an die Steuereinheit über mindestens eine inkrementelle Schnittstelle; und
e) Erzeugen eines zweiten Positionssignals mittels der Steuereinheit (154) durch ein Korrigieren des absoluten Positionssignals mithilfe des Inkrementalsignals,
f) Vergleichen des zweiten Positionssignals mit dem absoluten Positionssignal, wobei das Vergleichen ein Bilden einer Differenz zwischen dem absoluten Positionssignal und dem zweiten Positionssignal umfasst und die Rotationseigenschaft unter Nutzung des absoluten Positionssignals bestimmt wird, wenn die Differenz kleiner ist als ein Schwellwert, wobei die Rotationseigenschaft unter Nutzung des zweiten Positionssignals bestimmt wird, wenn die Differenz D größer ist als der Schwellwert.

Das Verfahren kann insbesondere unter Verwendung eines Sensorsystems gemäß der vorliegenden Erfindung, also gemäß einer der oben genannten Ausführungsformen oder gemäß einer der unten noch näher beschriebenen Ausführungsformen, durchgeführt werden. Dementsprechend kann für Definitionen und optionale Ausgestaltungen weitgehend auf die Beschreibung des Sensorelements verwiesen werden. Auch andere Ausgestaltungen sind jedoch grundsätzlich möglich.

Im Rahmen der vorliegenden Erfindung wird im Schritt e) die Rotationseigenschaft unter Verwendung des absoluten Positionssignals und unter Verwendung des Inkrementalsignals bestimmt. Dabei wird im Schritt e) von der Steuereinheit ein zweites Positionssignal erzeugt durch ein Korrigieren des absoluten Positionssignals mithilfe des Inkrementalsignals, wobei die Rotationseigenschaft mithilfe des zweiten Positionssignals bestimmt wird. Insbesondere kann der Schwellwert D_{S} einen Wert der Differenz D zwischen dem absoluten Positionssignal und dem zweiten Positionssignal umfassen. Weiterhin kann der Schwellwert D_{S} eine Frequenz des Inkrementalsignals umfassen. Ferner kann das Ausgeben des absoluten Positionsignals in Schritt c) mithilfe mindestens einer digitalen Schnittstelle umfassend mindestens eine SENT-Schnittstelle und/oder mindestens eine PSI5-Schnittstelle geschehen. Weiterhin kann das Ausgeben des Inkrementalsignals in Schritt d) mithilfe mindestens einer inkrementelle Schnittstelle umfassend mindestens eine Komparator-Schaltung und/oder mindestens einen Schmitt-Trigger geschehen. Insbesondere kann das Verfahren das Aufbereiten des mindestens einen absoluten Positionssignals durch mindestens eine erste Auswerteschaltung umfassen. Ferner kann das Verfahren das Aufbereiten des mindestens einen Inkrementalsignals durch mindestens eine zweite Auswerteschaltung umfassen. Insbesondere können die erste Auswerteschaltung und die zweite Auswerteschaltung auf einem gemeinsamen Schaltungsträger angeordnet sein. Alternativ können die erste Auswerteschaltung und die zweite Auswerteschaltung auf zwei getrennten Schaltungsträgern angeordnet sein. Weiterhin kann das Verfahren ein Ausgeben mindestens einer Sensorstatusinformation umfassen. Insbesondere kann die Sensorstatusinformation über die mindestens eine digitale Schnittstelle ausgegeben werden. Insbesondere kann das über die digitale Schnittstelle ausgegebene absolute Positionssignal die Sensorstatusinformation umfassen.

### Vorteile der Erfindung

Die vorgeschlagene Vorrichtung und das vorgeschlagene Verfahren weisen gegenüber bekannten Vorrichtungen und Verfahren zahlreiche Vorteile auf. Insbesondere kann es möglich sein, dass das erfindungsgemäße Sensorsystem und das erfindungsgemäße Verfahren eine gegenüber dem Stand der Technik erhöhte Genauigkeit bei der Bestimmung der mindestens einen Rotationseigenschaft des um mindestens eine Rotationsachse rotierenden Elements aufweisen kann, insbesondere da es möglich ist, dass mit dem Inkrementalsignal eine redundante Sensorinformation und dadurch eine zusätzliche Plausibilisierungsmöglichkeit des elektrischen Messsignals, insbesondere des absoluten Positionssignals, vorhanden sein kann. Insbesondere kann dadurch eine funktionale Sicherheit im Vergleich zu Stand der Technik erhöht sein. Ferner kann es möglich sein, dass das Inkrementalsignal, insbesondere Pulse, die einem Inkrementalwinkel entsprechen, über die inkrementelle Schnittstelle ausgegeben werden, insbesondere in Echtzeit gesendet werden. Weiterhin kann es möglich sein, dass eine Anpassung der Steuereinheit, insbesondere des Steuergeräts, nicht vorgenommen werden muss, insbesondere da es möglich sein kann, dass das Bestimmen der mindestens einen Rotationseigenschaft des um mindestens eine Rotationsachse rotierenden Elements mithilfe des erfindungsgemäßen Sensorsystems und/oder des erfindungsgemäßen Verfahrens auf bekannten Protokollen beruhen kann. Ferner kann es möglich sein, dass im Rahmen einer Nutzung des erfindungsgemäßen Sensorelements und/oder des erfindungsgemäßen Verfahrens lediglich eine zusätzliche Leitung nötig sein kann. Weiterhin kann es möglich sein, dass das Inkrementalsignal insbesondere eine im Vergleich zum Stand der Technik höhere Abtastrate aufweist.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

### Es zeigen:

- Figur 1: einen Ausschnitt aus einem erfindungsgemäßen Sensorsystem in einer Draufsicht;
- Figur 2: einen Phasengeber in einer Querschnittsansicht;
- Figur 3: ein Geberrad eines erfindungsgemäßen Sensorsystems in einer Draufsicht;
- Figur 4: einen weiteren Ausschnitt aus einem erfindungsgemäßen Sensorsystem in einer Draufsicht; und
- Figur 5: ein Flussdiagramm eines erfindungsgemäßen Verfahrens zur Bestimmung mindestens einer Rotationseigenschaft eines um mindestens eine Rotationsachse rotierenden Elements.

### Ausführungsformen der Erfindung

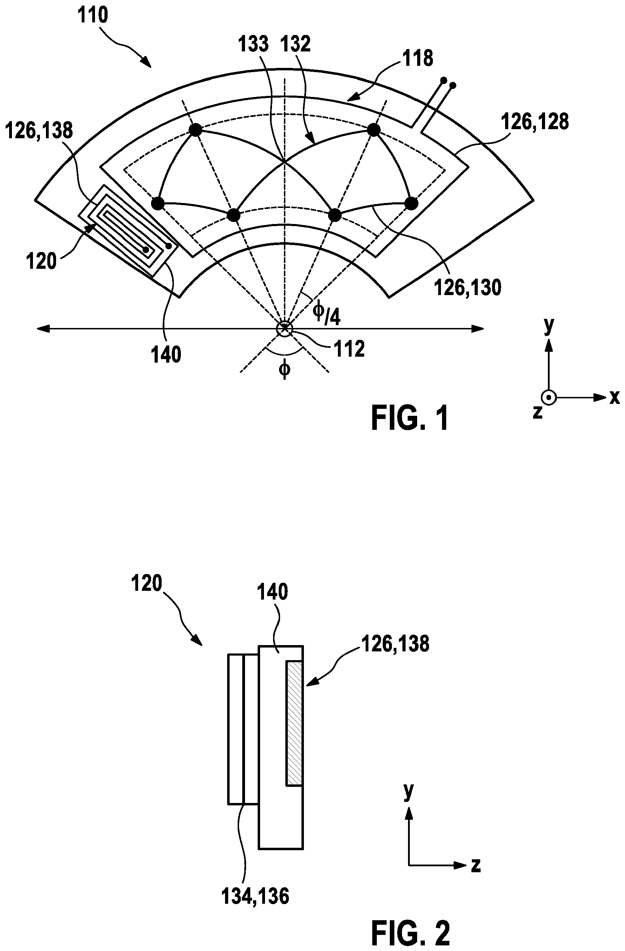

Figuren 1 und 2 zeigen jeweils einen Ausschnitt aus einem erfindungsgemäßen Sensorsystem 110 zur Bestimmung mindestens einer Rotationseigenschaft eines um mindestens eine Rotationsachse 112 rotierenden Elements. Das Sensorsystem 110 weist ein mit dem rotierenden Element verbindbares Geberrad 114 auf. Das Geberrad 114 weist ein Geberradprofil 116 auf. Das Sensorsystem 110 umfasst mindestens einen Positionssensor 118 und mindestens einen Phasengeber 120. Weiterhin weist das Sensorsystem 110 mindestens eine digitale Schnittstelle 150 und mindestens eine inkrementelle Schnittstelle 152 auf, wobei das Sensorsystem 110 eingerichtet ist, um über die digitale Schnittstelle 150 mindestens ein mittels des Positionssensors 118 erzeugtes absolutes Positionssignal auszugeben und über die inkrementelle Schnittstelle 152 mindestens ein mittels des Phasengebers 120 erzeugtes Inkrementalsignal auszugeben.

Wie in Figur 1 gezeigt, kann es sich bei dem Positionssensor 118 beispielsweise um einen induktiven Positionssensor 118 handeln, wobei eine Erzeugung des Messsignals durch den induktiven Positionssensor 118 auf einer Änderung eines magnetischen Flusses beruht. So kann der Positionssensor 118, insbesondere der induktive Positionssensor 118, mindestens eine Spule 126, insbesondere eine Mehrzahl von mindestens 2 Spulen 126, aufweisen. Insbesondere kann der induktive Positionssensor 118 mindestens eine Erregerspule 128 und mindestens eine Empfängerspule 130 aufweisen, insbesondere mindestens 2 Empfängerspulen 130, bevorzugt 3 Empfängerspulen 130. In Figur 1 ist beispielhaft ein induktiver Positionssensor 118 mit einer Empfängerspule 130 dargestellt. Insbesondere können die Empfängerspulen 130 aus jeweils mindestens zwei Teilwindungen 132 bestehen, wobei die unmittelbar aufeinanderfolgenden Teilwindungen 132 gegenläufig orientiert sein können, wie ebenfalls in Figur 1 zu sehen. Wie gleichfalls in Figur 1 dargestellt, kann die mindestens eine Empfängerspule 130 mindestens einen Kreuzungspunkt 133 aufweisen, wobei Spulenabschnitte der Empfängerspule 130, welche an einer Bildung des Kreuzungspunkts 133 beteiligt sind, in dem Kreuzungspunkt 133 übereinander hinweglaufen können ohne einander zu berühren. Insbesondere können die Empfängerspulen 130 zueinander eine elektrische Phasenverschiebung aufweisen. Insbesondere kann der Positionssensor 118 bevorzugt 3 Empfängerspulen 130 aufweisen und die 3 Empfängerspulen 130 können zueinander eine elektrische Phasenverschiebung von 120° aufweisen. Weiterhin können die Teilwindungen 132 der verschiedenen Empfängerspulen 130 gemäß der elektrischen Phasenverschiebung der verschiedenen Empfängerspulen 130 gegeneinander versetzt angeordnet sein.
Weiterhin kann die Erregerspule 128 insbesondere mit einer Wechselspannung von 2 MHz bis 10 MHz, bevorzugt von 4 MHz bis 6 MHz, besonders bevorzugt von 5 MHz beaufschlagt sein. Insbesondere kann der Positionssensor 118 einen Messbereich aufweisen. Insbesondere kann der Positionssensor in dem Messbereich ein für eine Winkelposition des rotierenden Elements eindeutiges Messsignal erzeugen. Wie in Figur 1 gezeigt, kann der Messbereich insbesondere durch einen Winkel Φ zumindest teilweise beschreibbar sein. Zum besseren Verständnis der Perspektive und der Blickrichtung sind in den Figuren 1 und 2 Koordinatensysteme miteingezeichnet. Auch Positionssensoren 118, die auf anderen Messprinzipien oder anderen Prinzipien der Messsignalerzeugung beruhen, sind jedoch denkbar.

Wie in Figur 1 dargestellt, umfasst das Sensorsystem 110 weiterhin einen Phasengeber 120. Figur 2 zeigt den Phasengeber 120 in einer Querschnittsansicht. Der Phasengeber kann mindestens einen Magnetfelderzeuger 134 aufweisen, insbesondere mindestens einen Dauermagneten 136 und/oder mindestens einen Elektromagneten, wie in Figur 2 zu sehen. Weiterhin kann der Phasengeber 120 mindestens ein Magnetsensorelement aufweisen, insbesondere ein Magnetsensorelement ausgewählt aus der Gruppe bestehend aus: einem Hall-Element; einem magnetoresistiven Element. Alternativ oder zusätzlich kann der Phasengeber 120 mindestens eine Spule 118, insbesondere eine Planarspule 138 aufweisen. Beispielsweise kann die Spule 118, insbesondere die Planarspule 138, auf einer Leiterplatte 140 aufgebracht sein, wie in Figur 2 dargestellt.

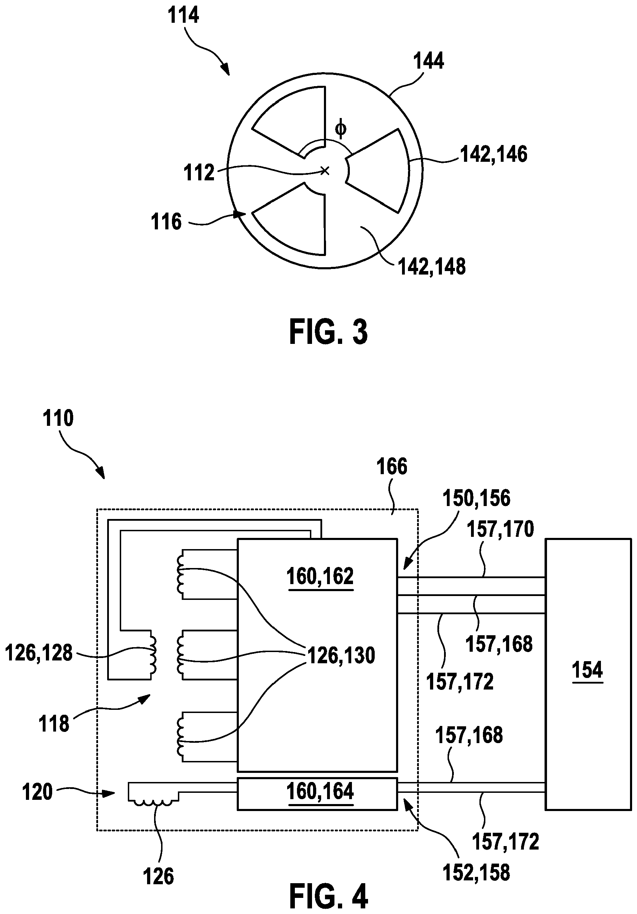

Das erfindungsgemäße Sensorsystem 110 umfasst weiterhin ein Geberrad 114 mit einem Geberradprofil 116. Figur 3 zeigt beispielhaft ein Geberrad 114 mit Geberradprofil 116 umfassend eine Mehrzahl von Profilelementen 142. Wie in Figur 3 dargestellt, kann das mindestens eine Profilelement 142 eine beispielsweise kreisförmige Kontur 144 des Geberrads 114 auch unverändert lassen. Insbesondere kann das Profilelement 142 durch elektrische, magnetische oder optische Eigenschaften zu der Entstehung des messbaren Signals beitragen. Beispielsweise kann ein Geberrad 114, insbesondere ein Geberrad 114 mit kreisförmiger Kontur 144, eine Mehrzahl von Profilelementen 142 aufweisen, welche derart angeordnet sein können, dass mindestens ein elektrisch leitfähiges Profilelement 146 von mindestens einem elektrisch nicht leitfähigen Profilelement 148 gefolgt wird. Insbesondere kann das mindestens eine Profilelement 142 mindestens ein Material aufweisen ausgewählt aus der Gruppe bestehend aus: einem elektrisch leitfähigen Material; einem ferromagnetischen Material; einem Metall. Weiterhin kann das Geberrad ein Material aufweisen ausgewählt aus der Gruppe bestehend aus: einem elektrisch leitfähigem Material; einem ferromagnetischen Material; einem Metall. Ferner kann das Sensorsystem 110 mindestens zwei Geberräder 114 aufweisen, insbesondere zwei Geberräder 114 mit unterschiedlichen Geberradprofilen 116.

Figur 4 zeigt einen Ausschnitt des Sensorsystems 110 mit Augenmerk auf der mindestens einen digitalen Schnittstelle 150 und der mindestens eine inkrementellen Schnittstelle 152 des Sensorsystems 110.
Bei dem an der digitalen Schnittstell 150 eingehenden Signal des Positionssensors 118 kann es sich um mindestens ein analoges Signal handeln, insbesondere um ein von dem Positionssensor erzeugtes absolutes Positionssignal, wie in Figur 4 dargestellt. Wie ebenfalls in Figur 4 gezeigt, kann das von der digitalen Schnittstelle 150 umgesetzte Signal für eine Übertragung an eine Steuereinheit 154 vorgesehen sein. Das Sensorsystem 110 umfasst weiterhin mindestens eine inkrementelle Schnittstelle 152. Die inkrementelle Schnittstelle 152 kann insbesondere ganz oder teilweise digital und/oder analog ausgebildet sein. Bei dem an der inkrementellen Schnittstelle 152 eingehenden Signal des Phasengebers 120 kann es sich insbesondere um mindestens ein analoges Signal handeln. Bei dem ausgehenden Signal kann es sich insbesondere um mindestens ein digitales Signal handeln. Wie in Figur 4 gezeigt, kann das von der inkrementellen Schnittstelle 152 umgesetzte Signal ebenfalls für eine Übertragung an eine Steuereinheit 154 vorgesehen sein. Insbesondere kann die inkrementelle Schnittstelle 152 getrennt von der digitalen Schnittstelle 150 ausgebildet sein.

Wie in Figur 4 gezeigt, kann das Sensorsystem 110 weiterhin mindestens eine Steuereinheit 154 umfassen. Die Steuereinheit 154 kann eingerichtet sein, um das Positionssignal und das Inkrementalsignal über die Schnittstellen 150, 152 zu erfassen. Die Steuereinheit 154 kann insbesondere ein oder mehrere, hier nicht gezeigte, elektronische Bauelemente umfassen, wie beispielsweise mindestens einen Verstärker, mindestens ein Speicherelement, mindestens eine Datenverarbeitungsvorrichtung oder Kombinationen der genannten und/oder anderer Elemente. Die Steuereinheit 154 kann insbesondere eingerichtet sein, das absolute Positionssignal mithilfe des Inkrementalsignals zu überprüfen und optional zu korrigieren. Ferner kann die Steuereinheit 154 eingerichtet sein, mindestens einen Schleppfehler des absoluten Positionssignals mithilfe des Inkrementalsignals zu ermitteln. Weiterhin kann die Steuereinheit 154 eingerichtet sein, mithilfe des absoluten Positionssignals und des Inkrementalsignals mindestens ein zweites Positionssignal zu bestimmen, wobei die Rotationseigenschaft aus dem zweiten Positionssignal bestimmbar ist. Insbesondere kann die Steuereinheit 154 eingerichtet sein, um das zweite Positionssignal zu bestimmen durch eine Korrektur des absoluten Positionsignals mithilfe des Inkrementalsignals. Weiterhin kann die Steuereinheit 154 eingerichtet sein, das zweite Positionssignal mit dem absoluten Positionssignal zu vergleichen. Insbesondere kann die Steuereinheit 154 eingerichtet sein, eine Differenz D zwischen dem absoluten Positionssignal und dem zweiten Positionssignal zu bilden. Die Steuereinheit 154 kann weiterhin eingerichtet sein, die Rotationseigenschaft aus dem absoluten Positionssignals zu bestimmen, wenn die Differenz D kleiner ist als ein Schwellwert Ds, wobei die Steuereinheit 154 ferner eingerichtet sein kann, die Rotationseigenschaft aus dem zweiten Positionssignals zu bestimmen, wenn die Differenz D größer ist als der Schwellwert D_{S}. Der Schwellwert D_{S} kann einem der Bereiche zugeordnet werden. Der Schwellwert D_{S} kann insbesondere einen Wert der Differenz D zwischen dem absoluten Positionssignal und dem zweiten Positionssignal umfassen. Insbesondere kann der Schwellwert Ds den Wert der Differenz D zwischen dem absoluten Positionssignal und dem zweiten Positionssignal umfassen und der Wert der Differenz kann einen Wert von 0,1° bis 1° aufweisen, insbesondere elektrische oder zwischen elektrischen Positionssignalen.

Weiterhin kann der Schwellwert D_{S} eine Frequenz des Inkrementalsignals umfassen.

Das Sensorsystem 110 umfasst mindestens eine digitale Schnittstelle 150 und mindestens eine inkrementelle Schnittstelle 152. Wie in Figur 4 dargestellt, kann die digitale Schnittstelle 150 mindestens eines der folgenden Elemente umfassen: eine SENT-Schnittstelle 156; eine PSI5-Schnittstelle. Hierbei steht die Abkürzung SENT für "Single Edge Nibble Transmission". Ferner steht die Abkürzung PSI5 für "Peripheral Sensor Interface 5" und/oder periphere Sensorschnittstelle 5. Insbesondere kann die SENT-Schnittstelle 156 mindestens drei Leitungen 157 umfassen, insbesondere mindestens eine Signalleitung 168, mindestens eine Spannungsversorgungsleitung 170 und mindestens eine Masseleitung 172. Wie ebenfalls in Figur 4 zu sehen, kann die inkrementelle Schnittstelle 152 mindestens eines der folgenden Elemente umfassen: eine Komparatorschaltung; einen Schmitt-Trigger 158. Insbesondere kann die inkrementelle Schnittstelle 152 mindestens zwei Leitungen 157 umfassen, insbesondere mindestens ein Masseleitung 172 und mindestens eine Signalleitung 168, welche insbesondere eingerichtet sein kann, um das Inkrementalsignal weiterzuleiten. Insbesondere kann die inkrementelle Schnittstelle 152 eingerichtet sein, um das Inkrementalsignal des Phasengebers 120 mittels der Komparatorschaltung und/oder mittels des Schmitt-Triggers 158 in ein digitales Signal umzusetzen. Weiterhin kann das Sensorsystem 110 eingerichtet sein, um über die digitale Schnittstelle 150 mindestens eine Sensorstatusinformation auszugeben. Insbesondere kann das über die digitale Schnittstelle 150 ausgegebene absolute Positionssignal die Sensorstatusinformation umfassen. Insbesondere kann die Sensorstatusinformation mindestens einen Inhalt bezüglich eines Sensortyps, einer Herstellerkennung und/oder eines Defekts des Sensorsystems 110, insbesondere des Positionssensors 118 und/oder des Phasengebers 120, umfassen.

Wie in Figur 4 gezeigt, kann das Sensorsystem 110 ferner mindestens eine Auswerteeinheit 160 umfassen, wobei die Auswerteeinheit 160 mindestens eine erste Auswerteschaltung 162 aufweisen kann, wobei die erste Auswerteschaltung 162 eingerichtet ist, das absolute Positionssignal aufzubereiten. Weiterhin kann die erste Auswerteschaltung 162 eingerichtet sein, um das absolute Positionssignal über die mindestens eine digitale Schnittstelle 150 an die Steuereinheit 154 weiterzuleiten. Insbesondere kann die erste Auswerteschaltung 162 die digitale Schnittstelle 150 umfassen. Wie in Figur 4 dargestellt, kann die Auswerteeinheit 160 weiterhin mindestens eine zweite Auswerteschaltung 164 aufweisen, wobei die zweite Auswerteschaltung 164 eingerichtet ist, das Inkrementalsignal aufzubereiten. Weiterhin kann die zweite Auswerteschaltung 164 eingerichtet sein, um das Inkrementalsignal über die mindestens eine inkrementelle Schnittstelle 152 an die Steuereinheit 154 weiterzuleiten. Insbesondere kann die zweite Auswerteschaltung 164 die inkrementelle Schnittstelle 152 umfassen. Die erste Auswerteschaltung 162 und zweite Auswerteschaltung 164 können ganz oder teilweise getrennt ausgebildet sein. Sie können jedoch auch ganz oder teilweise gemeinsam ausgebildet sein, beispielsweise auf einem gemeinsamen Schaltungsträger 166.

In einem weiteren Aspekt der vorliegenden Erfindung wird ein Verfahren zur Bestimmung mindestens einer Rotationseigenschaft eines um mindestens eine Rotationsachse rotierenden Elements vorgeschlagen.

Das Verfahren umfasst die Verwendung mindestens eines mit dem rotierenden Element verbindbaren Geberrads 114, wobei das Geberrad 114 ein Geberradprofil 116 aufweist. Das Verfahren umfasst die folgenden Schritte, bevorzugt in der angegebenen Reihenfolge. Auch eine andere Reihenfolge ist grundsätzlich möglich. Weiterhin können einer oder mehrere oder alle Verfahrensschritte auch wiederholt durchgeführt werden. Weiterhin können zwei oder mehrere der Verfahrensschritte auch ganz oder teilweise zeitlich überlappend oder gleichzeitig durchgeführt werden. Das Verfahren kann, zusätzlich zu den genannten Verfahrensschritten auch weitere Verfahrensschritte umfassen.

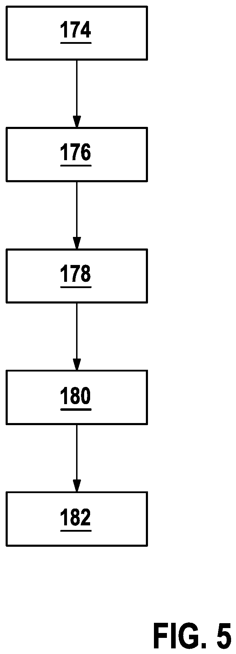

Wie in Figur 5 dargestellt, umfasst das Verfahren in einem ersten Schritt a) (Verfahrensschritt 174) ein Erzeugen mindestens eines absoluten Positionssignals durch mindestens einen Positionssensor 118; in einem zweiten Schritt b) (Verfahrensschritt 176) ein Erzeugen mindestens eines Inkrementalsignals durch mindestens einen Phasengeber 120; in einem dritten Verfahrensschritt c) (Verfahrensschritt 178) ein Ausgeben des absoluten Positionssignals an mindestens eine Steuereinheit 154 über mindestens eine digitale Schnittstelle 150; in einem vierten Schritt d) (Verfahrensschritt 180) ein Ausgeben des Inkrementalsignals an die Steuereinheit 154 über mindestens eine inkrementelle Schnittstelle 152; und in einem fünften Schritt e) (Verfahrensschritt 182) ein Erzeugen eines zweiten Positionssignals mittels der Steuereinheit (154) durch ein Korrigieren des absoluten Positionssignals mithilfe des Inkrementalsignals und einen Schritt f) des Vergleichens des zweiten Positionssignals mit dem absoluten Positionssignal, wobei das Vergleichen ein Bilden einer Differenz D zwischen dem absoluten Positionssignal und dem zweiten Positionssignal umfasst und die Rotationseigenschaft unter Nutzung des absoluten Positionssignals bestimmt wird, wenn die Differenz D kleiner ist als ein Schwellwert D_{S}, wobei die Rotationseigenschaft unter Nutzung des zweiten Positionssignals bestimmt wird, wenn die Differenz D größer ist als der Schwellwert Ds.

Das Verfahren kann insbesondere unter Verwendung eines Sensorsystems 110 gemäß der vorliegenden Erfindung, also gemäß einer der oben genannten Ausführungsformen oder gemäß einer der unten noch näher beschriebenen Ausführungsformen, durchgeführt werden. Im Rahmen der vorliegenden Erfindung wird im Schritt e) die Rotationseigenschaft unter Verwendung des absoluten Positionssignals und/ unter Verwendung des Inkrementalsignals bestimmt wird. Dabei wird in Schritt e) von der Steuereinheit 154 ein zweites Positionssignal erzeugt durch ein Korrigieren des absoluten Positionssignals mithilfe des Inkrementalsignals, wobei die Rotationseigenschaft mithilfe des zweiten Positionssignals bestimmt wird. Ferner umfasst das Verfahren einen in Figur 5 nicht gezeigten Schritt f) :
f) Vergleichen des zweiten Positionssignals mit dem absoluten Positionssignal.

Dabei umfasst das Vergleichen ein Bilden einer Differenz D zwischen dem absoluten Positionssignal und dem zweiten Positionssignal. Dabei wird die Rotationseigenschaft unter Nutzung des absoluten Positionssignals bestimmt, wenn die Differenz D kleiner ist als ein Schwellwert Ds, wobei die Rotationseigenschaft unter Nutzung des zweiten Positionssignals bestimmt wird, wenn die Differenz D größer ist als der Schwellwert Ds. Insbesondere kann der Schwellwert D_{S} einen Wert der Differenz D zwischen dem absoluten Positionssignal und dem zweiten Positionssignal umfassen. Insbesondere kann der Schwellwert D_{S} den Wert der Differenz D zwischen dem absoluten Positionssignal und dem zweiten Positionssignal umfassen und der Wert der Differenz kann einen Wert von 0,1° bis 1° aufweisen, insbesondere elektrische oder zwischen elektrischen Positionssignalen. Weiterhin kann der Schwellwert Ds eine Frequenz des Inkrementalsignals umfassen. Ferner kann das Ausgeben des absoluten Positionsignals in Schritt c) mithilfe mindestens einer digitalen Schnittstelle 150 umfassend mindestens eine SENT-Schnittstelle 156 und/oder mindestens eine PSI5-Schnittstelle geschehen. Weiterhin kann das Ausgeben des Inkrementalsignals in Schritt c) mithilfe mindestens einer inkrementelle Schnittstelle 152 umfassend mindestens eine Komparator-Schaltung und/oder mindestens einen Schmitt-Trigger 158 geschehen. Insbesondere kann das Verfahren das Aufbereiten des mindestens einen absoluten Positionssignals mindestens eine erste Auswerteschaltung 162 umfassen. Ferner kann das Verfahren das Aufbereiten des mindestens einen Inkrementalsignals mindestens eine zweite Auswerteschaltung umfassen. Insbesondere können die erste Auswerteschaltung 162 und die zweite Auswerteschaltung 164 auf einem gemeinsamen Schaltungsträger 166 angeordnet sein. Alternativ können die erste Auswerteschaltung 162 und die zweite Auswerteschaltung 164 auf zwei getrennten Schaltungsträgern 166 angeordnet sein. Weiterhin kann das Verfahren ein Ausgeben mindestens einer Sensorstatusinformation umfassen. Insbesondere kann die Sensorstatusinformation über die mindestens eine digitale Schnittstelle 150 ausgegeben werden. Insbesondere kann das über die digitale Schnittstelle 150 ausgegebene absolute Positionssignal die Sensorstatusinformation umfassen.

## Patentansprüche

1. Sensorsystem (110) zur Bestimmung mindestens einer Rotationseigenschaft eines um mindestens eine Rotationsachse (112) rotierenden Elements, wobei das Sensorsystem (110) mindestens ein mit dem rotierenden Element verbindbares Geberrad (114) aufweist, wobei das Geberrad (114) ein Geberradprofil (116) aufweist, wobei das Sensorsystem (110) mindestens einen Positionssensor (118) und mindestens einen Phasengeber (120) umfasst, wobei das Sensorsystem (110) mindestens eine digitale Schnittstelle (150) und mindestens eine inkrementelle Schnittstelle (152) aufweist, wobei das Sensorsystem (110) eingerichtet ist, um über die digitale Schnittstelle (150) mindestens ein mittels des Positionssensors (118) erzeugtes absolutes Positionssignal auszugeben und über die inkrementelle Schnittstelle (152) mindestens ein mittels des Phasengebers (120) erzeugtes Inkrementalsignal auszugeben, und wobei das Sensorsystem (110) weiterhin mindestens eine Steuereinheit (154) umfasst, wobei die Steuereinheit (154) eingerichtet ist, um das Positionssignal und das Inkrementalsignal über die Schnittstellen (150, 152) zu erfassen und wobei die Steuereinheit (154) weiterhin eingerichtet ist, mithilfe des absoluten Positionssignals und des Inkrementalsignals mindestens ein zweites Positionssignal zu bestimmen, **dadurch gekennzeichnet, dass** die Steuereinheit (154) eingerichtet ist, eine Differenz D zwischen dem absoluten Positionssignal und dem zweiten Positionssignal zu bilden, wobei die Steuereinheit (154) eingerichtet ist, die Rotationseigenschaft aus dem absoluten Positionssignals zu bestimmen, wenn die Differenz D kleiner als ein Schwellwert Ds ist, wobei die Steuereinheit (154) eingerichtet ist, die Rotationseigenschaft aus dem zweiten Positionssignals zu bestimmen, wenn die Differenz D größer als der Schwellwert Ds ist.

2. Sensorsystem (110) nach einem der vorhergehenden Ansprüche, wobei die digitale Schnittstelle (150) mindestens eines der folgenden Elemente umfasst: eine SENT-Schnittstelle (156); eine PSI5-Schnittstelle.

3. Sensorsystem (110) nach einem der vorhergehenden Ansprüche, wobei die inkrementelle Schnittstelle (152) mindestens eines der folgenden Elemente umfasst: eine Komparatorschaltung; einen Schmitt-Trigger (158).

4. Sensorsystem (110) nach einem der vorhergehenden Ansprüche, wobei das Sensorsystem (110) mindestens eine Auswerteeinheit (160) umfasst, wobei die Auswerteeinheit (160) mindestens eine erste Auswerteschaltung (162) aufweist, wobei die erste Auswerteschaltung (162) eingerichtet ist, das absolute Positionssignal aufzubereiten.

5. Verfahren zur Bestimmung mindestens einer Rotationseigenschaft eines um mindestens eine Rotationsachse (112) rotierenden Elements, wobei das Verfahren die Verwendung mindestens eines mit dem rotierenden Element verbindbaren Geberrads (114) umfasst, wobei das Geberrad (114) ein Geberradprofil (116) aufweist, wobei das Verfahren weiterhin folgenden Schritte umfasst:
g) Erzeugen mindestens eines absoluten Positionssignals durch mindestens einen Positionssensor (118);
h) Erzeugen mindestens eines Inkrementalsignals durch mindestens einen Phasengeber (120);
i) Ausgeben des absoluten Positionssignals an mindestens eine Steuereinheit (154) über mindestens eine digitale Schnittstelle (150);
j) Ausgeben des Inkrementalsignals an die Steuereinheit (154) über mindestens eine inkrementelle Schnittstelle (152); und
k) Erzeugen eines zweiten Positionssignals mittels der Steuereinheit (154) durch ein Korrigieren des absoluten Positionssignals mithilfe des Inkrementalsignals,
l) Vergleichen des zweiten Positionssignals mit dem absoluten Positionssignal,
**dadurch gekennzeichnet, dass** das Vergleichen ein Bilden einer Differenz D zwischen dem absoluten Positionssignal und dem zweiten Positionssignal umfasst und die Rotationseigenschaft unter Nutzung des absoluten Positionssignals bestimmt wird, wenn die Differenz D kleiner ist als ein Schwellwert Ds, wobei die Rotationseigenschaft unter Nutzung des zweiten Positionssignals bestimmt wird, wenn die Differenz D größer ist als der Schwellwert Ds.

6. Verfahren nach dem vorhergehenden Anspruch, wobei der Schwellwert Ds einen Wert der Differenz D zwischen dem absoluten Positionssignal und dem zweiten Positionssignal umfasst.

## Claims

1. Sensor system (110) for determining at least one rotation property of an element rotating about at least one axis of rotation (112), wherein the sensor system (110) has at least one encoder wheel (114) which can be connected to the rotating element, wherein the encoder wheel (114) has an encoder wheel profile (116), wherein the sensor system (110) comprises at least one position sensor (118) and at least one phase sensor (120), wherein the sensor system (110) has at least one digital interface (150) and at least one incremental interface (152), wherein the sensor system (110) is configured to output at least one absolute position signal generated by means of the position sensor (118) via the digital interface (150) and to output at least one incremental signal generated by means of the phase sensor (120) via the incremental interface (152), and wherein the sensor system (110) furthermore comprises at least one control unit (154), wherein the control unit (154) is configured to capture the position signal and the incremental signal via the interfaces (150, 152), and wherein the control unit (154) is furthermore configured to determine at least one second position signal with the aid of the absolute position signal and the incremental signal, **characterized in that** the control unit (154) is configured to form a difference D between the absolute position signal and the second position signal, wherein the control unit (154) is configured to determine the rotation property from the absolute position signal if the difference D is less than a threshold value D_{S}, wherein the control unit (154) is configured to determine the rotation property from the second position signal if the difference D is greater than the threshold value D_{S}.

2. Sensor system (110) according to one of the preceding claims, wherein the digital interface (150) comprises at least one of the following elements: a SENT interface (156); a PSI5 interface.

3. Sensor system (110) according to one of the preceding claims, wherein the incremental interface (152) comprises at least one of the following elements: a comparator circuit; a Schmitt trigger (158) .

4. Sensor system (110) according to one of the preceding claims, wherein the sensor system (110) comprises at least one evaluation unit (160), wherein the evaluation unit (160) has at least one first evaluation circuit (162), wherein the first evaluation circuit (162) is configured to preprocess the absolute position signal.

5. Method for determining at least one rotation property of an element rotating about at least one axis of rotation (112), wherein the method comprises the use of at least one encoder wheel (114) which can be connected to the rotating element, wherein the encoder wheel (114) has an encoder wheel profile (116), wherein the method furthermore comprises the following steps of:
g) generating at least one absolute position signal by means of at least one position sensor (118);
h) generating at least one incremental signal by means of at least one phase sensor (120);
i) outputting the absolute position signal to at least one control unit (154) via at least one digital interface (150);
j) outputting the incremental signal to the control unit (154) via at least one incremental interface (152); and
k) generating a second position signal by means of the control unit (154) by correcting the absolute position signal with the aid of the incremental signal,
1) comparing the second position signal with the absolute position signal,
**characterized in that** the comparison comprises forming a difference D between the absolute position signal and the second position signal, and the rotation property is determined using the absolute position signal if the difference D is less than a threshold value Ds, wherein the rotation property is determined using the second position signal if the difference D is greater than the threshold value Ds.

6. Method according to the preceding claim, wherein the threshold value D_{S} comprises a value of the difference D between the absolute position signal and the second position signal.

## Revendications

1. Système de détection (110) destiné à déterminer au moins une propriété de rotation d'un élément rotatif sur au moins un axe de rotation (112), le système de détection (110) comportant au moins une roue de codage (114) qui peut être reliée à l'élément rotatif, la roue de codage (114) ayant un profil de roue de codage (116), le système de détection (110) comprenant au moins un capteur de position (118) et au moins un codeur de phase (120), le système de détection (110) comportant au moins une interface numérique (150) et au moins une interface incrémentielle (152), le système de détection (110) étant conçu pour délivrer au moins un signal de position absolue, généré par le capteur de position (118), par le biais de l'interface numérique (150) et pour délivrer au moins un signal incrémentiel, généré par le codeur de phase (120), par le biais de l'interface incrémentielle (152), et le système de détection (110) comprenant en outre au moins une unité de commande (154), l'unité de commande (154) étant conçue pour détecter le signal de position et le signal incrémentiel par le biais des interfaces (150, 152) et l'unité de commande (154) étant en outre conçue pour déterminer au moins un deuxième signal de position à l'aide du signal de position absolue et du signal incrémentiel,
**caractérisé en ce que** l'unité de commande (154) est conçue pour former une différence D entre le signal de position absolue et le deuxième signal de position, l'unité de commande (154) étant conçue pour déterminer la propriété de rotation à partir du signal de position absolue si la différence D est inférieure à une valeur seuil Ds, l'unité de commande (154) étant conçue pour déterminer la propriété de rotation à partir du deuxième signal de position si la différence D est supérieure à la valeur seuil Ds.

2. Système de détection (110) selon l'une des revendications précédentes, l'interface numérique (150) comprenant au moins un des éléments suivants : une interface SENT (156) ; une interface PSI5.

3. Système de détection (110) selon l'une des revendications précédentes, l'interface incrémentielle (152) comprenant au moins un des éléments suivants : un circuit comparateur ; un déclencheur de Schmitt (158).

4. Système de détection (110) selon l'une des revendications précédentes, le système de détection (110) comprenant au moins une unité d'évaluation (160), l'unité d'évaluation (160) comportant au moins un premier circuit d'évaluation (162), le premier circuit d'évaluation (162) étant conçu pour traiter le signal de position absolue.

5. Procédé de détermination d'au moins une propriété de rotation d'un élément rotatif sur au moins un axe de rotation (112), le procédé comprenant l'utilisation d'au moins une roue de codage (114) pouvant être reliée à l'élément rotatif, la roue de codage (114) ayant un profil de roue de codage (116), le procédé comprenant en outre les étapes suivantes :
g) générer au moins un signal de position absolue à l'aide d'au moins un capteur de position (118) ;
h) générer au moins un signal incrémentiel à l'aide d'au moins un codeur de phase (120) ;
i) délivrer le signal de position absolue à au moins une unité de commande (154) par le biais d'au moins une interface numérique (150) ;
j) délivrer le signal incrémentiel à l'unité de commande (154) par le biais d'au moins une interface incrémentielle (152) ; et
k) générer un deuxième signal de position au moyen de l'unité de commande (154) par correction du signal de position absolue à l'aide du signal incrémentiel,
1) comparer le deuxième signal de position au signal de position absolue,
**caractérisé en ce que** la comparaison comprend la formation d'une différence D entre le signal de position absolue et le deuxième signal de position et la propriété de rotation est déterminée à l'aide du signal de position absolue si la différence D est inférieure à une valeur seuil Ds, la propriété de rotation étant déterminée à l'aide du deuxième signal de position lorsque la différence D est supérieure à la valeur seuil Ds.

6. Procédé selon la revendication précédente, la valeur seuil Ds comprenant une valeur de la différence D entre le signal de position absolue et le deuxième signal de position.
